# EUROPEAN PATENT SPECIFICATION

(11) **EP 2 426 013 B1**
(45) Date of publication and mention of the grant of the patent: **15.05.2013**
(21) Application number: 10174906.7
(22) Date of filing: 01.09.2010
(51) Int. Cl.: B60R 9/058

(54) **Roof rack for motor vehicles**
Dachgepäckträger für Motorfahrzeuge
Galerie de toit pour véhicules à moteur

(43) Date of publication of application: 07.03.2012
(73) Proprietor: SCAMBIA Industrial Developments Aktiengesellschaft, 9494 Schaan (LI)
(72) Inventor: Neuret, Jean-Pierre, 77600 Bussy Saint Georges (FR); Sarges, Bernard, 77120 Mouroux (FR)
(74) Representative: Hoeger, Stellrecht & Partner Patentanwälte

(56) References cited:
- WO-A1-95/11145
- WO-A1-2007/058589
- US-A- 2 948 509
- US-A- 4 441 344
- US-B1- 6 662 982

## Description

The invention refers to a roof rack for motor vehicles comprising a cross member and leg members arranged on both sides of said cross member, each leg member comprising a support unit, which is adapted to rest on a roof section of a body of said motor vehicle, said support unit comprising a retaining unit adapted to be connected to a mounting section of said body of said vehicle.

Roof racks according to the prior art usually use screws and nuts in order to fix the retaining unit to the support unit in a position in which the retaining unit exerts a clamping action on said mounting section of said body of said vehicle in order to clamp said support unit against said roof section.

Such connections using screws and nuts usually make it necessary to use a tool in order to fix the retaining unit to the support unit in its position clamping the support unit to said mounting section of said body of said vehicle.

The need to use tools for mounting the roof rack reduces the mounting comfort of the roof rack and also bears the risk that the retaining unit clamps the support unit with respect to the roof section with unnecessary strong clamping forces so that there is a risk that under load peaks the screw/nut connection breaks.

WO 95/11145 A1 discloses a roof rack according to the preamble of claim 1 having the above-mentioned features, said leg member comprising an actuating unit adapted to move said retaining unit in a direction between a release position and a retaining position, and said actuating unit being provided with a cam element acting on a cam follower element and said cam element being rotatably mounted on said support unit and said cam follower being connected to said retaining unit.

The advantage of this concept has to be seen in the use of a cam element and a cam follower element which provide a high handling comfort due to the fact that such a cam element enables a high force amplification so that save clamping of the support unit to the roof section of the body of said car can be obtained by the retaining unit with low power actuation of said actuating unit.

It is the object of the invention to provide a roof rack for motor vehicles which has a high handling comfort and which allows mounting of the roof rack with improved safety.

This object is solved by the features of claim 1.

The present invention provides that said cam follower element comprises a cam follower base with the cam follower opening in which said cam element is arranged.

Further the present invention provides that said cam follower surface is carried by said cam follower base.

Such a design is a very simple compact and safe design of the cam follower element due to the fact that the cam element is at least partially surrounded by said cam follower base. In a solution which is of particular advantage the cam follower base is surrounding said cam element so that said cam follower element and said cam element always remain in cooperation with each other.

The cam element and the cam surface can be designed in various ways. For example it would be possible to design a cam element and a cam surface to abut on each other more or less along a line of contact.

In order to be able to generate a clamping force which is sufficiently high for clamping the support unit against the roof section it is of advantage that said cam element is provided with a cam surface and said cam surface is acting on a cam follower surface of said cam follower element so that the forces per surface area unit are reduced.

In particular reducing the forces per area unit enables to use materials, for example plastic materials, which allow reduction of manufacturing costs.

In accordance with the inventive concept disclosed above the movement of the cam element itself in order to act on the cam follower is not specified in detail.

For example the cam element could be moved along a complex path.

However, a very simple design provides that said cam element is rotatable about a rotational axis so that said cam element can be mounted very easily on the element carrying said cam element.

Further the cam surface itself can have various shapes.

According to a preferred solution said cam surface comprises a release section, a retaining section and a transition section extending between said release section and said retaining section.

In particular at least surface areas of the transition section following each other in direction from said release section to said retaining section are arranged with increasing radial distance from said rotational axis so that when the cam element is rotatable about said rotational axis the transition section can have for example the shape of a section of a spiral.

In order to secure the cam element in its retaining position the retaining section of said cam element comprises a flattened area.

Such a flattened area can be designed such that in case the flattened area is in contact with the cam follower surface rotation of said cam element would make it necessary to further move the cam follower in a clamping direction in order to leave the retaining position so that consequently the cam element will not have the tendency to leave its retaining position and will be maintained in the retaining position due to the cooperation of the flattened area of said cam surface.

In order to also maintain the release position of the cam element another advantageous solution provides that said release section comprises a flattened area which serves the same purpose than explained in connection with the flattened area of said retaining section.

In order to improve the functioning of the flattened area it is further of advantage if said cam follower element is provided with the cam follower surface comprising a flattened area.

For example said flattened area can still serve as the area of contact between the cam surface and the cam follower surface.

One advantageous embodiment provides that said flattened area is the area which is in contact with the retaining section if the cam element remains in its retaining position or is in contact with the releasing section if the cam element remains in its release position and further the flattened surface cooperates with the transition section of said cam surface if the cam element is moved between the release position and the retaining position.

In particular said cam follower surface is arranged on at least one side of said cam follower opening.

Further it is of advantage if said cam follower surface is arranged on a cam follower insert inserted into said cam follower opening of said cam follower base because then said cam follower base can be manufactured without considering the surface quality required for said cam follower surface and the cam follower surface with the required surface quality can be arranged on said cam follower insert which is inserted into said cam follower opening and maintained by said cam follower base.

In order to provide the necessary surface extension for said cam follower surface a preferred embodiment provides a collar on said cam follower insert which carries said cam follower surface.

Further it is of advantage if said cam follower insert with its collar is supported by a base collar of said cam follower base so that according to this embodiment the collar of the cam follower insert is stabilized by the base collar.

In connection with the various embodiments explained before the connection between the retaining unit and the cam follower element has not been specified.

One advantageous solution provides that said cam follower element is connected to a retaining base of said retaining unit.

Further in connection with the aforementioned embodiments the arrangement of the cam element is not further specified.

One embodiment of particular advantage provides that said cam element is part of an actuating element.

In order to provide that said cam element is rotatable with respect to the support unit one preferred embodiment provides that said actuating element is rotatably fixed to said support unit.

A further advantageous solution provides that said support unit comprises a support element which is provided with a bearing eye in order to receive said actuating element and to enable rotational movement of said actuating element with respect to said support element.

According to a further embodiment said actuating element is provided with an actuating lever which enables tool free manual rotational movement of said actuating element about said rotational axis.

In order to enable secure fixation of said roof rack by said retaining unit one preferred embodiment provides that said retaining unit comprises a retaining element adapted to be received by a receiving element provided in said mounting section of said body.

The advantage of this solution has to be seen in the fact that contrary to embodiments known from the prior art the retaining unit is not only abutting on said mounting section with a surface but the retaining unit is in addition provided with a retaining element entering into a receiving element in order to provide a form locking connection between said retaining unit and said mounting section of said body provided with said receiving element.

An alternate or additional embodiment of the present invention provides that said retaining unit comprises a retaining surface adapted to contact a mounting surface on said body.

In connection with the aforementioned embodiments usually the actuating element is covered by a cover as known from prior art.

According to one advantageous embodiment the cover is adapted to be mounted on said support unit for covering said actuating element only in its retaining position which means that the cover can not be mounted on said support unit unless the actuating element remains in its remaining position.

In particular the cover is designed not to be mountable for covering said actuating element if said actuating element is in its release position.

In order to secure said cover to said support unit it is provided that said cover can be secured to said actuating element by a fixing device so that the cover is only secured indirectly to said support unit.

In particular said fixing device is provided with form locking means which are adapted to be brought in operational connection and out of operational connection with form locking means arranged on said actuating element.

In particular such form locking means are rotatable about an axis of rotation of said fixing device.

Further advantages and features of the present invention are subject matter of the description of a preferred embodiment in the following detailed specification.

The Figures show:
- Fig. 1: a perspective representation of a roof rack according to the present invention mounted on a roof section of a body of a vehicle;
- Fig. 2: a perspective representation of one leg member with the cover removed and the actuating unit being in its release position;
- Fig. 3: a perspective representation similar to Fig. 2 with the actuating unit being in its retaining position;
- Fig. 4: a exploded representation of a leg member with all its parts.
- Fig. 5: a sectional representation along lines 5-5 in Fig. 2;
- Fig. 6: a sectional representation along lines 6-6 in Fig. 5;
- Fig. 7: a sectional representation similar to Fig. 5 with the actuating unit being in a transitional position;
- Fig. 8: a sectional representation along lines 8-8 in Fig. 7;
- Fig. 9: a sectional representation similar to Fig. 5 with the actuating unit being in its released position;
- Fig. 10: a sectional representation along lines 10-10 in Fig. 9;
- Fig. 11: a representation of the radial distance between position points of a cam surface and the rotational axis according to various angles of rotation of the cam element shown in Fig. 10;
- Fig. 12: a sectional representation along lines 12-12 in Fig. 9;
- Fig. 13: a sectional representation along lines 13-13 in Fig. 12.

A first embodiment of a roof rack 10 according to the present invention is provided for being mounted on a roof section 12 of a body 14 of a vehicle and comprises a cross member 20 extending transverse to a longitudinal axis of body 14 with a distance to and above a roof surface 18. Cross member 20 comprises leg members 30 at both sides of said cross member 20 which legmembers 30 are designed to support cross member 20 on roof section 12 and in addition thereto to fix cross member 20 relative to roof section 12.

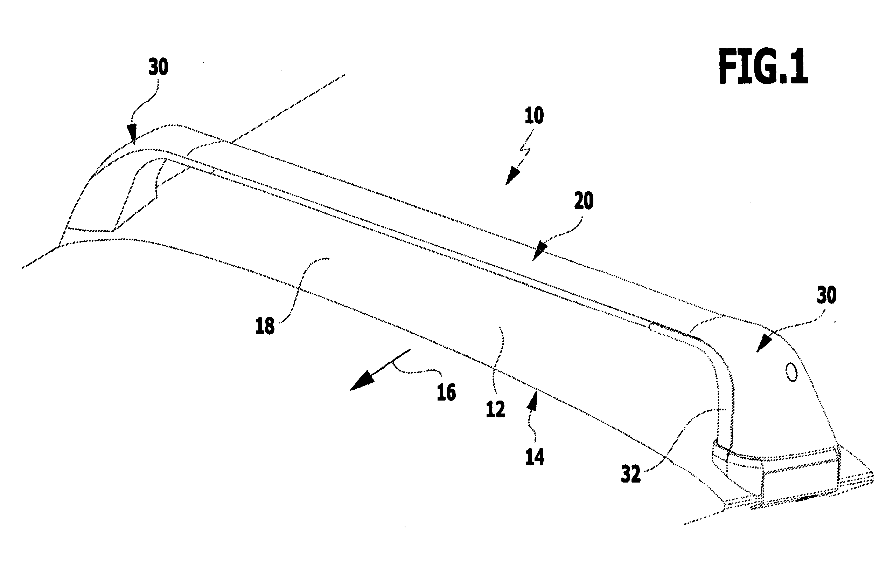

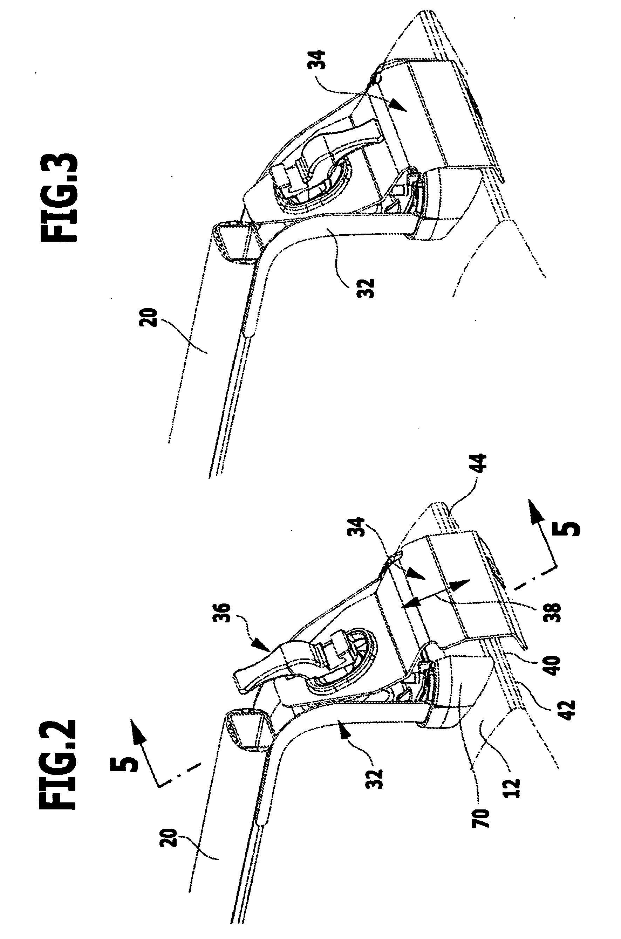

As shown in Fig. 1 to 3 each leg member is provided with a support unit 32, supporting cross member 20 with respect to roof section 12 and a retaining unit 34 which is moveable between a release position, shown in Fig. 2, and a retaining position, shown in Fig. 3, by an actuating unit 36 which is adapted to move retaining unit 34 in a direction 38 running transverse to a mounting section 40 provided on said body 14, in particular at outer sidesof said roof section 12, and having a mounting surface 42 extending on a side of said roof section 12 which extends opposite to roof surface 18. In particular mounting section 40 is provided on an upper portion of a door opening provided in said body 14 and mounting surface 42 is a portion of a border structure 44 surrounding said door opening in said body 14 and in particular a border structure 44 carrying roof section 12.

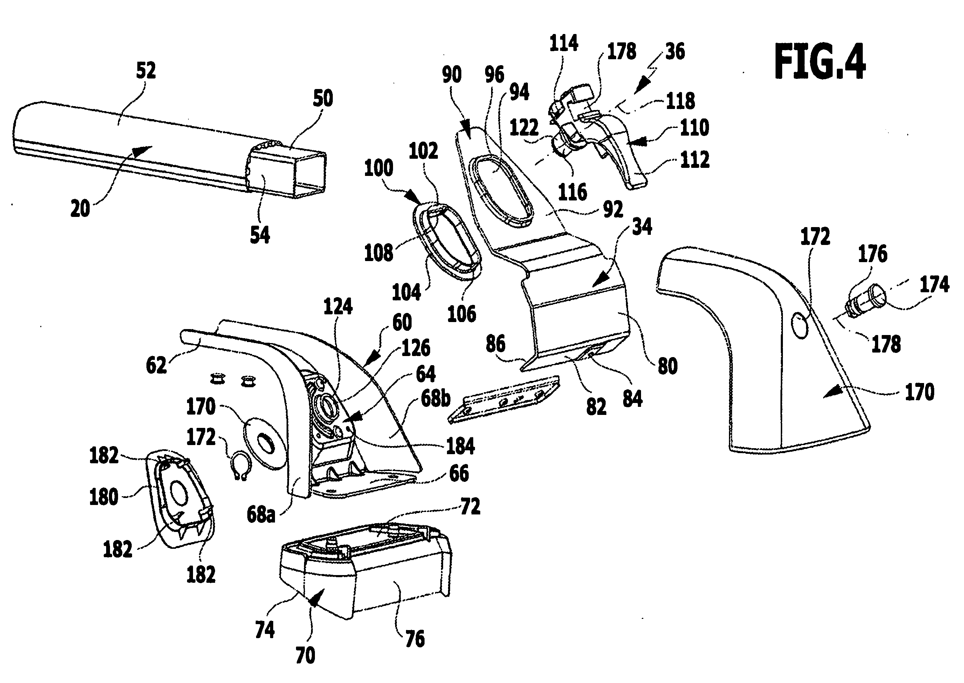

As shown in particular in Fig. 4 cross member 20 comprises a carrier bar 50 surrounded by a sleeve 52 which covers carrier bar 50.

Carrier bar 50 is provided with an end portion 50 which is received by a receiving section 62 of a support element 60 of said support unit 32 which support element 60 further comprises a base section 64 connecting said receiving section 62 to a support section 66. Further support section 60 comprises two outer wall sections 68a and 68b extending from receiving section 62 along base section 64 to support section 66 and being connected at least to receiving section 62 and base section 64.

Support section 66 is supported by foot element 70 which is made of elastic material and comprises a rest surface 72 on which support section 66 is resting and to which support section 66 is fixed. Further foot element 70 comprises a support surface 74 with which foot element 70 is sitting on roof surface 18, in particular on outer areas of roof surface 18 close to structure 44 of body 14.

Further foot element 70 comprises outer surface 76 directed towards retaining unit 34 and extending between rest surface 72 and support surface 74 and transverse to rest surface 72 and support surface 74.

Retaining unit 34 comprises a retaining base 80 which on one end section carries a retaining portion 82 as well as a retaining element 84 which is provided for a form locking connection to structure 44 which will be explained later in detail.

Retaining portion 82 is extending transverse to retaining base 80 and carries retaining surface 86 which is provided to abut on mounting surface 42 of mounting section 40 of body 14.

Further retaining base 80 on its side opposite to retaining portion 82 is connected to a cam follower element 90 of actuating unit 36 comprising a cam follower base 92 which preferably is formed as one part with retaining base 80 and retaining portion 82.

In an advantageous embodiment cam follower element 90, retaining base 80 and retaining portion 82 are bent from one piece of sheet metal.

Cam follower base 92 further comprises a cam follower opening 94 surrounded by a base collar 96 which extends transverse to cam follower base 92 and is preferably formed as one piece with cam follower base 92.

A cam follower insert is provided to be inserted into cam follower opening 94 and covering base collar 96 on its inner side directed towards cam follower opening 94 by a collar 100 extending transverse to a collar flange 102 which is provided to abut cam follower base 92 on a side opposite to the side on which base collar 96 is arranged.

Further collar 102 is adapted to the shape of base collar 96 and fully supported by base collar 96 in its extension transverse to cam follower base 92. In particular collar 102 is fixed in cam follower opening 92 and fixed to base collar 96 by snap elements 106 arranged on a side of collar 102 opposite to the side of collar of flange 104.

Collar 102 on its inner side provides a cam follower surface 108 used for moving retaining unit 34 in direction 38 by actuating unit 36.

Actuating unit 36 comprises an actuating element 110 which is provided with an actuating lever 112, a cam element 114 and a bearing portion 116, whereas said bearing portion 116 defines an axis of rotation 118 of actuating element 110.

Bearing portion 116 is preferably provided with an outer cylindrical surface 122 which is received in a bearing eye 124 arranged in base section 64 and which is preferably shaped as a ring with an inner cylindrical surface 126 guiding outer cylindrical surface 122 of bearing portion 116.

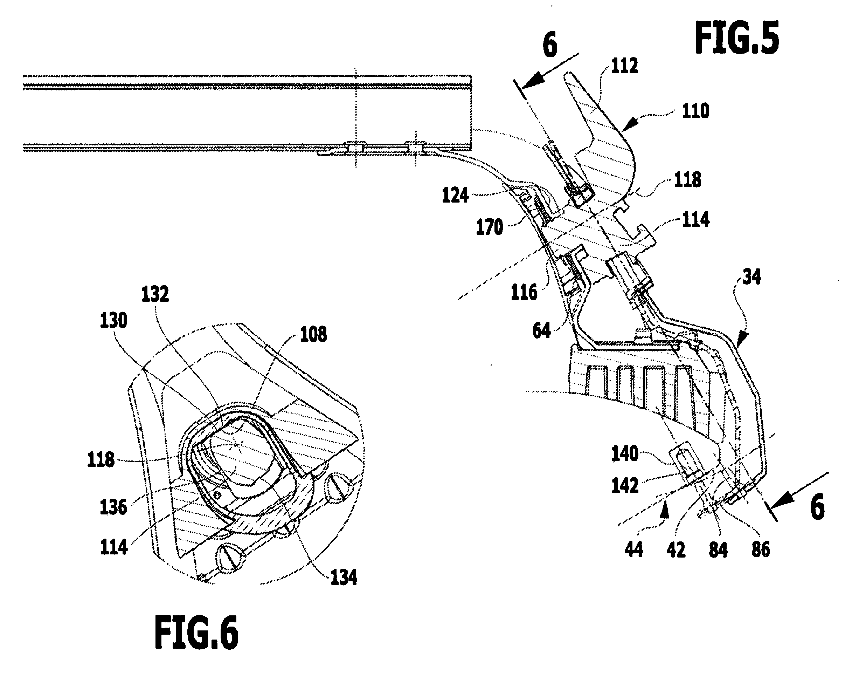

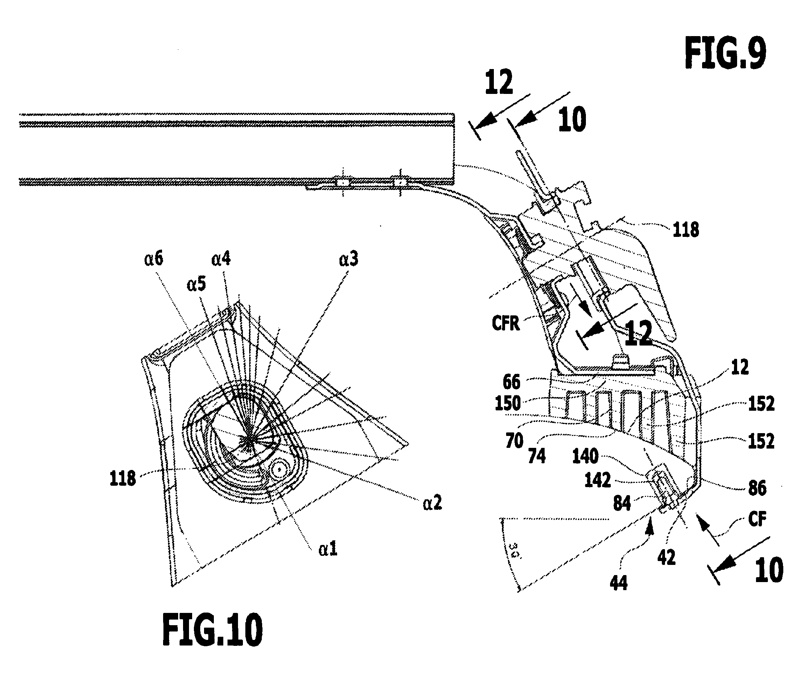

As shown in Fig. 5 to 10 cam element 114 is provided with a cam surface 130 having a release section 132, a retaining section 134 and a transition section 136 extending between release section 132 and retaining section 136 which sections 132, 136, 134 due to rotation of cam element 114 by an angle α about axis of rotation 118 are able to come in contact with cam follower surface 108 at least with certain areas thereof in order to move cam follower surface 108 in direction 38.

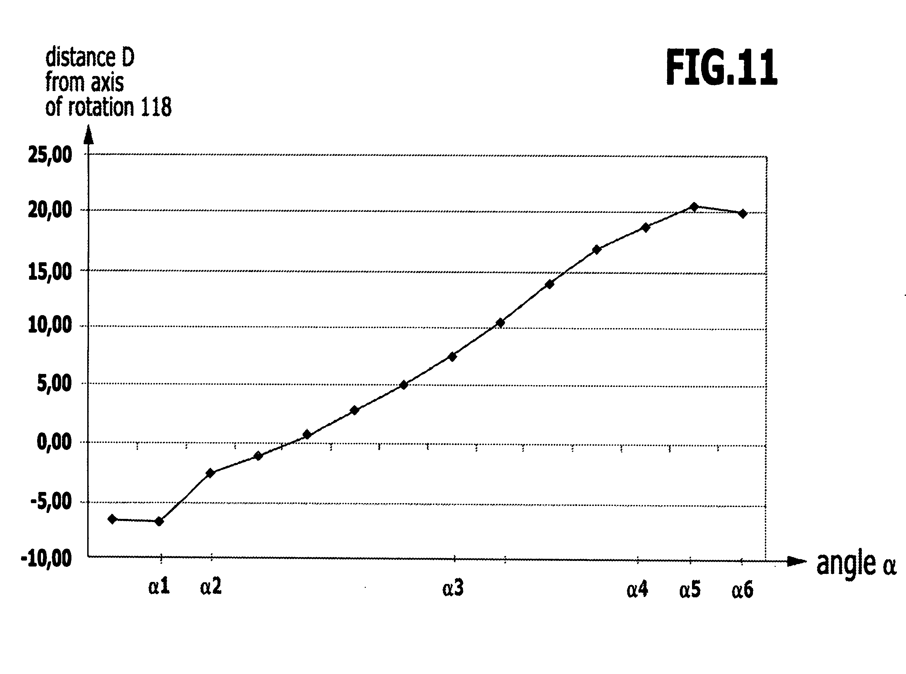

Due to the fact that release section 132 is arranged at the smallest distance D from axis of rotation 118 and retaining section 134 is arranged at the largest distance D from rotational axis 118 whereas transition section 136 is provided with an increasing distance D from rotational axis 118 when extending from release section 132 to retaining section 134, as shown in Fig. 11, the action of the various sections 132, 136 and 134 on cam follower surface 108 (see Fig. 11) will move cam follower surface 108 and therewith cam follower element 90 at certain distances from rotational axis 118 and therefore move the entire retaining unit 34 with retaining base 80 as well as retaining portion 82 and retaining element 84 in the direction 38 in order to move retaining unit 34 between its release position and its retaining position.

For example, as shown in Fig. 5 actuating element 110 is rotated in its release position which means that release section 132 of cam surface 130 is supporting cam follower surface 108 in order to allow retaining unit 34 to move into its upper most direction downwards towards roof section 12 and mounting section 40 in order to arrange retaining surface 86 in the maximum distance from mounting surface 42 so that retaining element 84 can be moved over mounting surface 42 in order to be positioned in front of a receiving element 140 having a recess 142 in which retaining element 84 can enter in order to provide a form locking connection between border structure 44 and retaining unit 34.

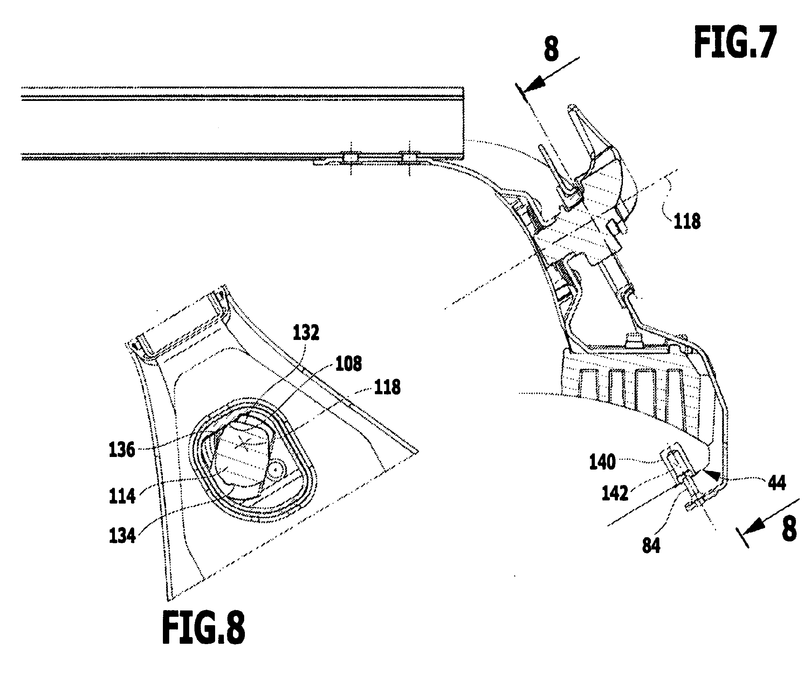

If retaining element 84 is positioned in front of recess 142 and able to enter recess 142, as shown in Fig. 5 by the position of retaining unit 34 drawn dashed lines actuating element 110 can be rotated about rotational axis 118 in order to move cam follower surface 108 into a greater distance from rotational axis 118 by acting on cam follower surface 108 with certain areas of transition section 136 (Fig. 8).

As shown in Fig. 7 this will move retaining element 84 into recess 142 in order to provide a form locking connection between retaining unit 34 and structure 44 comprising receiving element 140 with recess 142.

If cam element 110 is rotated further, other areas of transition section 136 which have an increasing distance from rotational axis 118 will act on cam follower surface 108 in order to further move cam follower element 90 together with retaining unit 34 in a direction away from structure 44 in order to move retaining element 84 fully into recess 142 of receiving element 140 and to further bring retaining surface 86 into contact with mounting surface 42 of border structure 44 so that retaining surface 86 will act with a clamping force CF on mounting surface 42 of structure 44 and as a reaction a clamping force CFR will press support section 66 onto foot element 70 which itself will be pressed with support surface 74 on roof surface 18.

Due to the fact that foot element 70 as shown in Fig. 5, 7 and 9 is provided with a foot element base 150 and with ribs 152 extending from the foot element base 150 towards support surface 74 of foot element 70, the ribs 152 provide an elastic behaviour of a foot element 70 with its extension between support surface 74 and rest surface 72 arranged on foot element base 150 so that foot element 70 is able to be compressed between rest surface 72 and foot surface 74 due to reaction clamping force CFR which enables to compensate for tolerances in actuating unit 36 when moving actuating unit 36 into its retaining position.

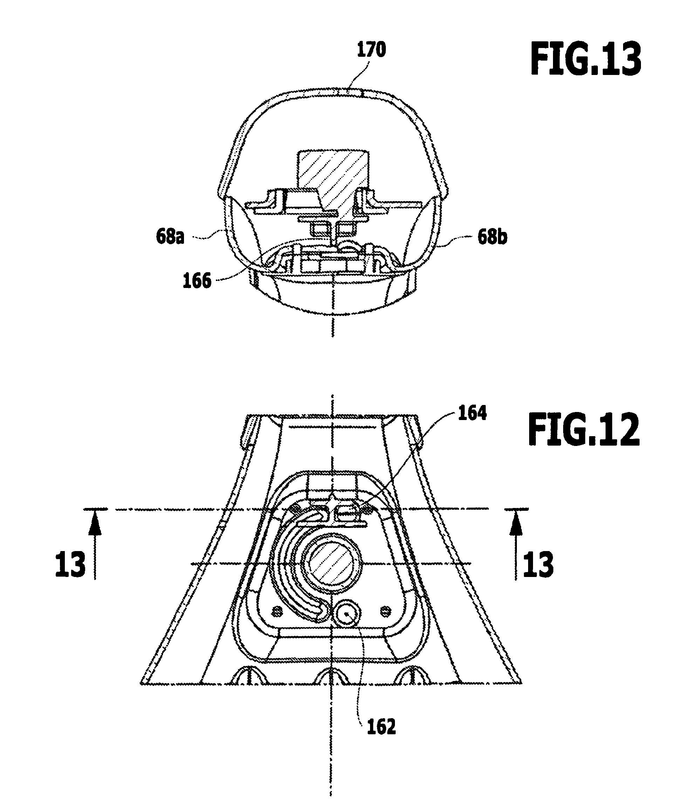

As shown in Fig. 12 and 13 base section 64 is provided with two stop elements 162 and 164 which are protrusions from base section 64. Against stop elements 162, 164 a stop segment 166 will abut in the release position or the retaining position. Stop segment 166 is comprised by actuating element 110 and protruding from cam element 114 on a side opposite from the actuating lever 112and extending in the same direction as bearing pin 116.

As further shown in Fig. 5, 7 and 9 bearing portion 116 is fixed to base section 64 and in particular bearing eye 124 by a sliding disc 170 abutting on base section 64 on its side opposite to the position of cam element 114 and actuating lever 112 and by a snap ring 172 which is resting in a groove of bearing pin 116 and abutting on sliding ring 170 on its side opposite base section 64.

In order to protect sliding rings 170 and snap ring 172 an inner cover 180 is provided which covers base section 64 on its side directed towards the other leg number 30.

Inner cover 180 is provided with pins 182 which can be pressed into holes 184 provided in base sections 64 and providing a press fixation of pins 182.

In order to prevent actuating element 110 from being actuated unintended or unallowed and in order to make sure that actuating element stays in its retaining position when the vehicle with roof rack 10 is used, leg member 30 comprises a cover 170 extending between ribs 68a and 68b and covering actuating unit 36, in particular actuating lever 112 of actuating element 110.

Cover 170 is designed such that it cannot be mounted on support element 60 as long as actuating element 110 is in its release position because then actuating lever 112 will prevent proper mounting of cover 170.

Cover 170 can only be mounted in the retaining position of actuating unit 36 in particular the retaining position of actuating element 110.

For being fixed to leg member 30 cover 170 is provided with a receiving means 172 for a fixing element 174 having form locking means 176 at its front end directed towards actuating element 110.

Actuating element 110 itself is provided with form locking means 178 which are adapted to cooperate with form locking means 176 so that fixing element 174 can be fixed to actuating element 110 in order to fix cover 170 with respect to leg member 30.

Fixing element 176 can be for example a simple rotatable fixing element which can be rotated by any kind of tooling.

According to another alternative fixing element 174 can be a locking element which can be only rotated by a key in order to bring form locking means 176 in operative connection with form locking means 178 or to bring form locking means 176 out of their operative position with form locking means 178.

In order to provide a cost saving solution preferably actuating element 110 with actuating lever 112, cam element 114, form locking means 178 and pin 116 are made of a moulded plastic material which can be easily manufactured for example by a molding process even though it has a complex shape.

Further cam follower insert 100 is also manufactured from plastic material, in particular the same plastic material as actuating element 110, in order to prevent any excessive wear between cam surface 130 and cam follower surface 108.

Further manufacturing cam follower insert 100 from plastic material reduces manufacturing costs of this element.

## Claims

1. Roof rack for motor vehicles comprising
a cross member (20) and
leg members (30) arranged on both sides of said cross member each leg member (30) comprising a support unit (32), which is adapted to rest on a roof section (12) of a body (40) of said motor vehicle, said support unit (32) comprising a retaining unit (34) adapted to be connected to a mounting section (40) of said body of said vehicle, said leg member (30) comprising an actuating unit (36) adapted to move said retaining unit in a direction (38) between a release position and a retaining position, said actuating unit (36) being provided with a cam element (114) having a cam surface (130) acting on a cam follower surface (108) of a cam follower element (90), said cam element (114) being rotatably mounted on said support unit (32) and said cam follower element (90) being connected to said retaining unit (34), **characterized in that** said cam follower element (90) comprises a cam follower base (92) with a cam follower opening (94) in which said cam element (114) is arranged and that said cam follower surface (108) is carried by said cam follower base (92).

2. Roof rack according to claim 1, **characterized in that** said cam element (114) is rotatable about a rotational axis (118).

3. Roof rack according to one of the preceding claims, **characterized in that** said cam surface (130) comprises a release section (132), a retaining section (134) and a transition section (136) extending between said release section (132) and said retaining section (134).

4. Roof rack according to claim 3, **characterized in that** at least surface areas of said transition section (136) following each other in direction from said release section (132) to said retaining section (134) are arranged in increasing radial distance from said rotational axis (118).

5. Roof rack according to any of the preceding claims, **characterized in that** said cam follower surface (108) is arranged on at least one side of said cam follower opening (94).

6. Roof rack according to any of the preceding claims, **characterized in that** said cam follower surface (108) is arranged on a cam follower insert (100), inserted into said cam follower opening (94) of said cam follower base (92).

7. Roof rack according to claim 6, **characterized in that** said cam follower insert (100) is provided with a collar (102) which carries cam follower surface (108).

8. Roof rack according to claim 6 or 7, **characterized in that** said cam follower insert (100) with its collar (102) is supported by a base collar (96) of said cam follower base (92).

9. Roof rack according to any of the preceding claims, **characterized in that** said cam element (114) is part of an actuating element (110).

10. Roof rack according to claim 9, **characterized in that** said actuating element (110) is rotatably fixed to said support unit (32) and that in particular said support unit (32) comprises a support element (60) which is provided with a bearing eye (124) in order to receive said actuating element (110) and to enable rotational movement of said actuating element (110) with respect to said support element (60).

11. Roof rack according to any of claims 9 or 10, **characterized in that** said actuating element (110) is provided with an actuating lever (112) which enables tool-free manual rotational movement of said actuating element (110) about said rotational axis (118).

12. Roof rack according to any of the preceding claims, **characterized in that** said retaining unit (34) comprises a retaining element (84) adapted to be received by a receiving element (140) provided in said mounting section (40) of said body.

## Patentansprüche

1. Dachträger für Motorfahrzeuge, umfassend:
ein Querelement (20) und
Fußelemente (30), welche beiderseits des Querelements angeordnet sind, wobei jedes Fußelement (30) eine Trageinheit (32) umfasst, welche auf einen Dachabschnitt (12) einer Karosserie (40) des Motorfahrzeugs aufsetzbar ist, wobei die Trageinheit (32) eine Halteeinheit (34) umfasst, welche mit einem Montageabschnitt (40) der Karosserie des Fahrzeugs verbindbar ist, wobei das Fußelement (30) eine Betätigungseinheit (36) umfasst, welche dazu ausgebildet ist, die Halteeinheit in einer Richtung (38) zwischen einer Freigabeposition und einer Halteposition zu bewegen, wobei die Betätigungseinheit (36) mit einem Kurvenkörperelement (114) versehen ist, welches eine Kurvenkörperoberfläche (130) aufweist, die auf eine Kurvenkörperfolgeroberfläche (108) eines Kurvenkörperfolgerelements (90) wirkt, wobei das Kurvenkörperelement (114) an der Trageinheit (32) rotierbar gelagert ist und wobei das Kurvenkörperfolgerelement (90) mit der Halteeinheit (34) verbunden ist, **dadurch gekennzeichnet, dass** das Kurvenkörperfolgerelement (90) eine Kurvenkörperfolgerbasis (92) mit einer Kurvenkörperfolgeröffnung (94) aufweist, in welcher das Kurvenkörperelement (114) angeordnet ist, und dass die Kurvenkörperfolgeroberfläche (108) von der Kurvenkörperfolgerbasis (92) getragen ist.

2. Dachträger nach Anspruch 1, **dadurch gekennzeichnet, dass** das Kurvenkörperelement (114) um eine Rotationsachse (118) rotierbar ist.

3. Dachträger nach einem der voranstehenden Ansprüche, **dadurch gekennzeichnet, dass** die Kurvenkörperoberfläche (130) einen Freigabeabschnitt (132), einen Halteabschnitt (134) und einen sich zwischen dem Freigabeabschnitt (132) und dem Halteabschnitt (134) erstreckenden Übergangsabschnitt (136) aufweist.

4. Dachträger nach Anspruch 3, **dadurch gekennzeichnet, dass** mindestens in Richtung von dem Freigabeabschnitt (132) zu dem Halteabschnitt (134) aufeinanderfolgende Oberflächenbereiche des Übergangsabschnitts (136) in zunehmendem radialen Abstand von der Rotationsachse (118) angeordnet sind.

5. Dachträger nach einem der voranstehenden Ansprüche, **dadurch gekennzeichnet, dass** die Kurvenkörperfolgeroberfläche (108) auf mindestens einer Seite der Kurvenkörperfolgeröffnung (94) angeordnet ist.

6. Dachträger nach einem der voranstehenden Ansprüche, **dadurch gekennzeichnet, dass** die Kurvenkörperfolgeroberfläche (108) an einem Kurvenkörperfolgereinsatz (100) angeordnet ist, welcher in die Kurvenkörperfolgeröffnung (94) der Kurvenkörperfolgerbasis (92) eingesetzt ist.

7. Dachträger nach Anspruch 6, **dadurch gekennzeichnet, dass** der Kurvenkörperfolgereinsatz (100) mit einem Kragen (102) versehen ist, der die Kurvenkörperfolgeroberfläche (108) trägt.

8. Dachträger nach Anspruch 6 oder 7, **dadurch gekennzeichnet, dass** der Kurvenkörperfolgereinsatz (100) mit seinem Kragen (102) von einem Basiskragen (96) der Kurvenkörperfolgerbasis (92) getragen ist.

9. Dachträger nach einem der voranstehenden Ansprüche, **dadurch gekennzeichnet, dass** das Kurvenkörperelement (114) Teil eines Betätigungselements (110) ist.

10. Dachträger nach Anspruch 9, **dadurch gekennzeichnet, dass** das Betätigungselement (110) an der Trageinheit (32) rotierbar fixiert ist und dass insbesondere die Trageinheit (32) ein Tragelement (60) umfasst, welches mit einem Lagerauge (124) versehen ist, um das Betätigungselement (110) aufzunehmen und eine Rotationsbewegung des Betätigungselements (110) bezüglich des Tragelements (60) zu ermöglichen.

11. Dachträger nach einem der Ansprüche 9 oder 10, **dadurch gekennzeichnet, dass** das Betätigungselement (110) mit einem Betätigungshebel (112) versehen ist, der eine werkzeuglose manuelle Rotationsbewegung des Betätigungselements (110) um die Rotationsachse (118) ermöglicht.

12. Dachträger nach einem der voranstehenden Ansprüche, **dadurch gekennzeichnet, dass** die Halteeinheit (34) ein Halteelement (84) umfasst, welches von einem in dem Montageabschnitt (40) der Karosserie bereitgestellten Aufnahmeelement (140) aufnehmbar ist.

## Revendications

1. Galerie de toit pour véhicules à moteur comprenant une traverse (20) et
des organes formant jambe (30) agencés des deux côtés de ladite traverse
chaque organe formant jambe (30) comprenant une unité de support (32), qui est adaptée pour reposer sur une section de toit (12) d'une carrosserie (40) dudit véhicule à moteur, ladite unité de support (32) comprenant une unité de retenue (34) adaptée pour être raccordée à une section de montage (40) de ladite carrosserie dudit véhicule, ledit organe formant jambe (30) comprenant une unité d'actionnement (36) adaptée pour déplacer ladite unité de retenue dans une direction (38) entre une position de libération et une position de retenue, ladite unité d'actionnement (36) étant pourvue d'un élément de came (114) ayant une surface de came (130) agissant sur une surface de galet de came (108) d'un élément de galet de came (90), ledit élément de came (114) étant monté rotatif sur ladite unité de support (32) et ledit élément de galet de came (90) étant raccordé à ladite unité de retenue (34), **caractérisée en ce que** ledit élément de galet de came (90) comprend une base de galet de came (92) avec une ouverture de galet de came (94) dans laquelle ledit élément de came (114) est agencé et **en ce que** ladite surface de galet de came (108) est portée par ladite base de galet de came (92).

2. Galerie de toit selon la revendication 1, **caractérisée en ce que** ledit élément de came (114) est rotatif autour d'un axe de rotation (118).

3. Galerie de toit selon l'une des revendications précédentes, **caractérisée en ce que** ladite surface de came (130) comprend une section de libération (132), une section de retenue (134) et une section de transition (136) s'étendant entre ladite section de libération (132) et ladite section de retenue (134).

4. Galerie de toit selon la revendication 3, **caractérisée en ce qu'**au moins des zones de surface de ladite section de transition (136) se suivant les unes les autres dans une direction allant de ladite section de libération (132) à ladite section de retenue (134) sont agencées à une distance radiale croissante depuis ledit axe de rotation (118).

5. Galerie de toit selon l'une quelconque des revendications précédentes, **caractérisée en ce que** ladite surface de galet de came (108) est agencée sur au moins un côté de ladite ouverture de galet de came (94).

6. Galerie de toit selon l'une quelconque des revendications précédentes, **caractérisée en ce que** ladite surface de galet de came (108) est agencée sur un insert de galet de came (100), inséré dans ladite ouverture de galet de came (94) de ladite base de galet de came (92).

7. Galerie de toit selon la revendication 6, **caractérisée en ce que** ledit insert de galet de came (100) est pourvu d'un collier (102) qui porte la surface de galet de came (108).

8. Galerie de toit selon la revendication 6 ou 7, **caractérisée en ce que** ledit insert de galet de came (100) avec son collier (102) est supporté par un collier de base (96) de ladite base de galet de came (92).

9. Galerie de toit selon l'une quelconque des revendications précédentes, **caractérisée en ce que** ledit élément de came (114) fait partie d'un élément d'actionnement (110).

10. Galerie de toit selon la revendication 9, **caractérisée en ce que** ledit élément d'actionnement (110) est fixé avec faculté de rotation à ladite unité de support (32) et **en ce qu'**en particulier, ladite unité de support (32) comprend un élément de support (60) qui est pourvu d'un oeillet porteur (124) afin de recevoir ledit élément d'actionnement (110) et de permettre un mouvement de rotation dudit élément d'actionnement (110) par rapport audit élément de support (60).

11. Galerie de toit selon l'une quelconque des revendications 9 ou 10, **caractérisée en ce que** ledit élément d'actionnement (110) est pourvu d'un levier d'actionnement (112) qui permet un mouvement de rotation manuel sans outil dudit élément d'actionnement (110) autour dudit axe de rotation (118).

12. Galerie de toit selon l'une quelconque des revendications précédentes, **caractérisée en ce que** ladite unité de retenue (34) comprend un élément de retenue (84) adapté pour être reçu par un élément récepteur (140) disposé dans ladite section de montage (40) de ladite carrosserie.
